# EUROPEAN PATENT APPLICATION

(11) **EP 4 660 564 A1**
(43) Date of publication of application: **10.12.2025**
(21) Application number: 24305881.5
(22) Date of filing: 04.06.2024
(51) Int. Cl.: F27B 9/22, F27B 9/26, F27D 3/00, F27D 3/12, F27D 5/00, C21D 9/00, F16C 29/04, F27B 9/24

(54) **TRANSPORT DEVICES AND ASSEMBLIES FOR TRANSPORTING AN OBJECT TO BE FIRED INTO, THROUGH OR OUT OF A KILN**

(71) Applicant: ImerTech SAS, 75015 Paris (FR)
(72) Inventor: The designation of the inventor has not yet been filed
(74) Representative: Faure-Geors, Vanessa

(57) **Abstract**

The present invention relates to a transport device and transport assembly for transporting objects to be fired into, through or out of a kiln, and uses thereof. The transport device comprising a housing having a rolling element aperture, at least two rolling elements, wherein the at least two rolling elements are rotatable within the housing and wherein the rolling elements are housed in the housing and a part of the rolling elements extends through the rolling element aperture beyond the bottom surface of the housing, such that, in use, the rolling elements rotate within the housing to transport the transport device along the surface along which the object to be fired in a kiln is to be transported. The transport assembly comprising a support element, and at least one transport device. A method of transporting objects to be fired in a kiln using the transport device and/or transport assembly is also provided.

## Description

### FIELD OF THE INVENTION

The present invention relates to transport devices and transport assemblies for transporting an object to be fired into, through or out of a kiln. The present invention further relates to uses of such transport devices and transport assemblies, and a method of transporting objects to be fired in a kiln using a transport device or transport assembly.

### BACKGROUND OF THE INVENTION

Kiln cars play a crucial role in the ceramic industry by facilitating the firing process of ceramic products. Kiln cars are designed to transport ceramic products through kilns for firing. As each type of kiln has unique design aspects, kiln cars are often tailored to the kiln and can vary in size, shape, construction, and complexity. However, a kiln car typically comprises a metal structure with insulation blocks arranged to prevent the metal structure from melting in the kiln.

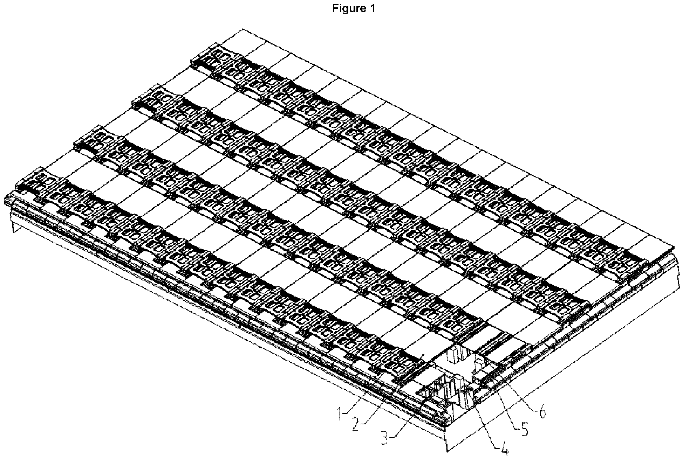

A conventional kiln car is shown in Figure 1. The kiln car comprises base batts (1), cover batts (2), pillars (3), supports for side stacks (4) perimeter (5) and plot (6). Under the cover batt (2) are supporting bricks, insulations and a metal chassis. Such a kiln car weights for example about 5 000 to 15 000 kg, or about from 300 to 700 kg/m².

Conventional kiln cars are heavy, leading to difficulties in handling, increased wear, and high maintenance needs. Additionally, due to their structure, Kiln cars have a relatively high specific energy consumption, and poor thermal performance. Therefore, they require time to heat up during firing, and time to cool post-firing, as the kiln car is heated to the firing temperature in the kiln and cooled down to ambient temperature alongside ceramic products. Therefore, current kiln cars absorb a large amount of heat energy, resulting in a waste of energy, long firing times and increased CO₂ emissions.

It is therefore desirable to provide improved ways to transport an object to be fired into, through or out of a kiln. In particular, it is desirable to provide a way to transport objects to be fired in a kiln into, through and out of a kiln which reduces energy consumption.

### SUMMARY OF THE INVENTION

The present invention is defined in the appended claims.

In accordance with a first aspect, there is provided a transport device for transporting an object to be fired into or out of a kiln, the transport device comprising:
a housing comprising a bottom surface having a rolling element aperture; and
at least two rolling elements for facilitating movement of the housing along a surface along which the object to be fired in a kiln is to be transported;
wherein the at least two rolling elements are rotatable within the housing and wherein
the rolling elements are housed in the housing and a part of the rolling elements extends through the rolling element aperture beyond the bottom surface of the housing;
such that, in use, the rolling elements rotate within the housing to transport the transport device along the surface along which the object to be fired in a kiln is to be transported.

The inventors have surprisingly found that the transport device of the present invention needed less energy (for heating up and/or cooling down), and therefore resulted in reduced energy consumption and could allow reducing firing times compared to conventional kiln cars. The transport device was also found to reduce the need for maintenance.

In accordance with a second aspect, there is provided a use of a transport device according to the first aspect, for transporting an object to be fired into or out of a kiln, and for supporting the object in the kiln whilst being fired.

In accordance with a third aspect, there is provided a transport assembly for transporting an object to be fired into or out of a kiln, the transport assembly comprising:
a support element; and
at least one transport device according to the first aspect;
wherein the transport device is releasably engageable with the support element to allow for movement of the transport assembly.

The inventors have surprisingly found that the transport assembly of the present invention was not as heavy as a traditional kiln car. The transport assembly of the present invention had a weight per square meter of about 26 kg/m².

In accordance with a fourth aspect, there is provided a method of transporting objects to be fired in a kiln using a transport device or transport assembly, the method comprising the steps of:
a. placing an object to be fired in a kiln onto a transport device according to the first aspect, or onto a transport assembly according to the third aspect; and
b. transporting the object from a first location to a second location.

In accordance with a fifth aspect, there is provided a use of the transport device according to the first aspect, or the transport assembly according to the third aspect, to reduce the energy consumption for the firing of a ceramic item compared to kiln cars and/or to reduce the friction compared to kiln cars.

Certain embodiments of the present invention may provide one or more of the following advantages:
- decreased weight;
- reduced energy consumption;
- reduced firing time;
- improved efficiency;
- improved simplicity of design of the transport assembly; and
- improved ease of maintenance and replacement of parts.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### BRIEF DESCRIPTION OF THE DRAWINGS

The invention will further be illustrated by reference to the following figures:
- Figure 1: shows a conventional kiln car as in the state of the art;
- Figure 2a: shows a top view of a first exemplary embodiment of a transport device according to the present invention;
- Figure 2b: shows a side view of the transport device of Figure 1a;
- Figure 3: shows a front perspective view of the transport device of \;
- Figure 4a: shows a bottom perspective view of the transport device of \;
- Figure 4b: shows a bottom perspective view of a releasable securing element for use alongside the transport device of Figure 1a;
- Figure 5: shows a schematic representation of an internal cross section of the transport device of Figure 1a;
- Figure 6: shows a top perspective view of an embodiment of a transport assembly according to the present invention;
- Figure 7a: shows a side view of the transport assembly of Figure 6, with guide rails;
- Figure 7b: shows side view and a cross sectional view of the transport assembly of Figure 6, with guide rails, and kiln furniture;
- Figure 8: shows a top perspective view of a transport device according to the present invention with attachment means for forming a transport assembly;
- Figure 9: shows a top perspective view of a transport assembly of Figure 6 with batts.
- Figure 10: shows a top perspective view of a transport assembly of Figure 6 with kiln cassettes; and
- Figure 11: shows a bottom perspective view of a transport assembly of Figure 6;
- Figure 12: shows a bottom exploded perspective view of second exemplary embodiment of a transport assembly according to the present invention.

It is understood that the following description and references to the figures concern exemplary embodiments of the present invention and shall not be limiting the scope of the claims.

### DETAILED DESCRIPTION

The present invention provides a transport device for transporting objects to be fired into, through and out of a kiln, according to the appended claims.

### Transport Device

The present invention provides a transport device for transporting an object to be fired into or out of a kiln. The transport device comprises a housing comprising a bottom surface having a rolling element aperture, and at least two rolling elements for facilitating movement of the housing along a surface along which the object to be fired in a kiln is to be transported. The at least two rolling elements are rotatable within the housing and wherein the rolling elements are housed in the housing and a part of the rolling elements extends through the rolling element aperture beyond the bottom surface of the housing. In use, the rolling elements rotate within the housing to transport the transport device along the surface along which the object to be fired in a kiln is to be transported.

### Objects

The object to be fired in the kiln may be a ceramic object. For example, in some embodiments, the object to be fired in the kiln may be selected from the list comprising: tile (for example, a roof tile, a wall tile or a floor tile), ceramic sculpture, vase, grinding wheel or disc, brick, kitchenware, porcelain enamels, sanitary ware, decorative pottery, lighting fixtures, garden items, infrastructure items, kiln furniture, or combinations thereof. Alternatively, the object to be fired can be an object to be heat treated, for example the object can be a non-ceramic object. For example, the object can be a metal or/or glass.

The object to be fired in the kiln may comprise green body ceramic material. In some embodiments the object to be fired may be a flat structure. In a certain embodiment, the object to be fired in the kiln may be a ceramic tile. For example, the object to be fired may be a heavy clay roof tile.

In embodiments, the object to be fired is placed directly on the transport device. In alternative embodiments, the object to be fired is placed indirectly on the transport device, for example, in some embodiments, the object to be fired may be placed on the transport assembly. In some embodiments, the object to be fired may be placed on kiln furniture located on the transport device or transport assembly. In some embodiments, in order to avoid deformation through softening of the green ceramic products during firing, the object to be fired may be supported on refractory kiln furniture cassettes. The kiln furniture cassette may be a H-shaped cassette. Beneficially, H-shaped cassettes allow improved and controlled heat transfer within a kiln.

In embodiments, the transport device and/or transport assembly is for transporting two or more objects to be fired into or out of a kiln. In embodiments, the transport device and/or transport assembly is for transporting a plurality of objects to be fired into or out of a kiln. In particular embodiments, the objects to be fired may be placed on the transport device via H-shaped cassettes arranged in a kiln by stacking of H-shaped cassettes on top of each other, in a way that enough space is left between the support portions to allow support of objects to be fired thereon, and subsequent juxtaposition of a plurality of stacks of cassettes.

In embodiments, the transport device and/or transport assembly is also for transporting objects that have been fired in a kiln.

### Kiln

The transport device and/or transport apparatus may be used for transporting an object to be fired into or out of any suitable kiln. For example, the kiln may be a tunnel kiln, a shuttle kiln, or a pusher kiln. The kiln may be a ceramic kiln. For example, the kiln may be a ceramic tunnel kiln or a ceramic shuttle kiln.

The transport device and/or transport apparatus is for transporting an object to be fired into or out of a kiln. The transport device and/or transport apparatus may also transport an object to be fired through a kiln. In other words, the transport device and/or transport apparatus may transport an object to be fired into the kiln, remain with the object to be fired in the kiln, and then transport the object out of the kiln after firing. During the firing process, heating energy is required for heating all the contents of the kiln, including both the objects to be fired and any transport devices and/or transport apparatus. The present inventors found that a transport device and transport assembly according to the present invention required less energy consumption than conventional kiln cars.

One or more transport device may be used to transport an object to be fired into or out of a kiln. The number of transport devices may be tailored to the specific use, and/or to the object to be fired and/or to the type of kiln. In some embodiments, more than two transport devices are used for transporting an object to be fired into or out of a kiln, for example, in some embodiments, four or more transport devices may be used, or six or more transport devices may be used for transporting an object to be fired into or out of a kiln. In a preferred embodiment, four transport devices are used to transport an object to be fired into or out of a kiln.

### Housing

The housing of the transport device may be hollow. The housing may be a hollow structure comprising gaps in the structure of the housing. Such gaps may reduce the weight of the housing, whilst maintaining structural integrity. In some embodiments, heating energy is required for heating all the contents of the kiln, including both the object to be fired and the housing, as such, a hollow housing may reduce the mass of the housing and lead to an increased energetic efficiency of the firing process.

The housing comprises a bottom surface. The housing typically further comprises a body comprising said bottom surface, a top surface and one or more sidewalls. It will be appreciated that the housing may take various shapes dependent on the design of the housing.

The bottom surface of the housing is typically planar or flat. The body of the housing may be polygonal (e.g. rectangular, or square) in shape. It will be appreciated that a (e.g. substantially) polygonal body does not necessarily have sharp vertices but may instead have rounded vertices.

In some embodiments, the housing is formed from a refractory material. A suitable refractory material may be selected from alumina, cordierite, nitride bonded silicon carbide (NSiC), silicon carbide (SiSiC) and recrystallised silicon carbide (RSiC), or any combination thereof. In a particular embodiment, the housing comprises silicon carbide.

In embodiments, the housing may be formed by use of a casting technology, a 3D printing technology, or by a combination of both.

In some embodiments, the transport device comprises attachment means for attaching the transport device to the support elements to form a transport assembly. In some embodiments, the attachment means extend from the top surface of the housing. In some embodiments, the transport device comprises more than one attachment means. In some embodiments, the attachment means are integral in the shape of the transport device. For example, the transport device may be attached via interference fit to a support element with depressions of a complementary size and shape to the surface of the transport device.

The body of the housing may comprise an insertion aperture configured to allow for insertion and/or removal of the rolling elements into/from the housing. The insertion aperture may be located within a sidewall of the housing.

In embodiments, the rolling elements may be releasably secured in the body of the housing by a releasable securing element. The releasable securing element may be securable by complementary engagement with the insertion aperture. In an embodiment, the releasable securing element secures the rolling elements by blocking the insertion aperture. The releasable securing element may comprise a blocking element and a locking element, where the blocking element blocks the insertion aperture, and the locking element locks the releasable securing element in place relative to the insertion aperture. The blocking portion is preferably a complementary shape and dimension to the insertion aperture. The locking portion may lock the blocking portion in place by passing through the blocking portion whilst it is within the insertion aperture. The locking portion may have a portion that extends through the housing, and a portion that abuts a sidewall of the housing to secure the releasable securing element. Alternative embodiments can be envisaged however, in which the rolling elements are secured in an alternative manner.

### Rolling element aperture

The transport device comprises a rolling element aperture. The transport device comprises a housing comprising a bottom surface having a rolling element aperture.

In some embodiments, the transport device comprises at least two rolling element apertures, for example, at least three rolling element apertures, at least four rolling element apertures, at least five rolling element apertures or at least six rolling element apertures. In particular embodiments, the transport device comprises a plurality of rolling element apertures.

The rolling element aperture may be of any suitable shape to allow a part of the at least two rolling elements to extend through the rolling element aperture beyond the bottom surface of the housing.

In some embodiments, the rolling element aperture is substantially C-shaped, O-shaped, I-shaped or U-shaped. Preferably, the rolling element aperture is substantially C-shaped or I-shaped.

### Rolling element

The transport device comprises at least two rolling elements for facilitating movement of the housing along a surface along which the object to be fired in a kiln is to be transported.

The at least two rolling elements are rotatable within the housing. The rolling elements are housed in the housing and a part of the rolling elements extends through the rolling element aperture beyond the bottom surface of the housing. The rolling element extending beyond the bottom surface of the transport device allows for the rolling element to facilitate transportation. In use, the rolling elements rotate within the housing to transport the transport device along the surface along which the object to be fired in a kiln is to be transported. For example, the at least two rolling elements may contact a guide rail for guiding the movement and/or direction and/or rolling path of the transport device. In another example, the at least two rolling elements may simply contact the ground/floor and guide the movement and/or direction and/or rolling path of the transport device. Advantageously, having the rolling elements in the housing allows for dust protection, and in turn may reduce the need for maintenance. Dust commonly causes friction when transporting objects. Dust may also lead to blockages and reduced movement; the present invention may prevent these problems by the partial arrangement of the rolling elements within the housing.

In some embodiments, the transport device comprises at least three rolling elements, for example, at least four rolling elements, at least six rolling elements, at least eight rolling elements, at least ten rolling elements or at least twelve rolling elements. In particular embodiments, the transport device comprises a plurality of rolling elements. A plurality of rolling elements may advantageously distribute the load of the object to be fired. Distribution of the load of the object to be fired may reduce the need for maintenance and/or reduce the friction between the surface along which the object is being transported and the rolling elements.

In some embodiments, the number of rolling elements is equal or higher than the number of rolling element apertures.

In an embodiment, the transport device comprises at least two rolling element apertures, and wherein the rolling elements partly extend through the two rolling element apertures.

The rolling elements may be removeable from the housing of the transport device. Advantageously, this may allow for rolling elements to be replaced or tailored to different needs. The replacement of rolling elements may also allow for ease of maintenance of the transport device if the rolling elements experience wear over time.

In embodiments, the at least two rolling elements are selected from: refractory balls, beads, or rollers. In a specific embodiment, the transport device comprises a plurality of refractory balls arranged within the housing.

The rolling elements may comprise alumina, silicon carbide (SiC), tungsten, and/or any combination thereof. In some embodiments, the refractory balls comprise alumina.

Providing rolling elements within the housing of the transport device may also reduce the need for large roller systems for movement of objects to be fired. The present invention provides a simple way to move objects to, through and out of a kiln. There is no need for external movement, or pneumatic movement of parts outside of the kiln, the transport devices simply move on the rotation of the rolling elements.

### Surface

In use, the rolling elements rotate within the housing to transport the transport device along the surface along which the object to be fired in a kiln is to be transported.

The surface along which the object to be fired in a kiln is to be transported may be the ground floor of a kiln, or the surface of a rail. For example, the surface may be a guide rail arranged on the ground floor of the kiln to direct the object to be fired into, through and out of a kiln. In some embodiments, the surface may be a surface (for example, the ground floor) within a kiln.

### Assembly

The transport assembly transports an object to be fired into, through or out of a kiln.

The transport assembly comprises a support element. The transport assembly comprises at least a transport device. The transport device being releasably engageable with the support element to allow for movement of the transport assembly.

In embodiments, the transport assembly comprises two or more transport devices, for example, in some embodiments, the transport assembly comprises four or more transport devices, or six or more transport devices for transporting an object to be fired into or out of a kiln. In a preferred embodiment, the transport assembly comprises four transport devices.

The transport assembly may comprise one or more support elements. In some embodiments, the transport assembly comprises two or more support elements. In some embodiments, the transport assembly comprises three or four or five or six support elements. In a preferred embodiment, the transport assembly comprises two support elements. In some embodiments, the two or more support elements are arranged parallel to one another. The number of support elements is determined depending on the dimensions of the kiln.

The transport assembly may further comprise one or more support members securable to the support element. In some embodiments, the transport assembly comprises two or more support members. In some embodiments, the transport assembly comprises three or four or five or six support members. In a preferred embodiment, the transport assembly comprises four support members. In some embodiments, the support members are arranged parallel to one another. The number of support members may be determined depending on the dimensions of the kiln.

The one or more support members may be a beam structure or a batt structure or a combination thereof. For example, the support member may be a support beam.

In some embodiments, the transport assembly comprises at least two support elements secured to a plurality of support members. The at least two support elements may be arranged parallel to one another. The support members may be arranged perpendicular to the support elements. The support members may also be arranged parallel to one another.

The support members and support elements may be secured to one another in any suitable manner, such as via a connector element (for example a rivet), interference fit (through complementary shaping of the support member and support elements), or through adhesives or thermal joining.

In an embodiment, each support element may have a number of engagement notches corresponding to the number of support members to which it may engage. The engagement notches may be of a complementary size and shape to allow for interference fit between the support members and support elements. In other words, the support element may be grooved to fit a support member. In some embodiments the support members are supported by one more support elements. The support member may slot into the engagement notch during use of the transport assembly. The support member may be removed from the engagement notch after use of the transport assembly.

The support element may be symmetrical. In some embodiments, the support element may be in the form of a board, batt, plant, brace, strut, joist or a beam. In some embodiments, the support elements may have t-shaped cross section, however other any suitable cross-section capable of engagement with a transport device may be envisaged. In embodiments, the support element may have a wider portion and narrower portion. The wider portion of the support element may form the base of the support element. The support member may be secured at either portion. For example, in some embodiments, an engagement notch for securing the support members may be positioned in the narrower section. The engagement notch may extend partially through the narrower top section to allow the one or more support members to slot into it and be supported by one or more supports elements.

The transport device is releasably engageable with the support element to allow for movement of the transport assembly. In embodiments, the support element comprises connector apertures that allow for releasable engagement of the support element and transport device. In embodiments, the support element comprises connector apertures that allow for reversible insertion of the attachment means of the transport device into the support element. In other words, the attachment means may be slotted through connector apertures in the support element.

In embodiments, a connector aperture may be dimensioned to allow for insertion of the attachment means. The connector apertures may be within the wider portion of the support element. Connector apertures may be within the narrower portion of the support element. In embodiments, connector apertures may be provided at any suitable portion of the support element that allow for a transport device to be releasably engaged. In other words, connector apertures may be provided at the wider portion and narrower portion of the support element.

In some embodiments, the attachment means is releasably secured to the support element using an attachment element. In some embodiments the attachment element is an elongated element. In some embodiments, the attachment element has a substantially U-shaped, or C-shaped cross section. In some embodiments, the attachment element may be symmetrical. In some embodiments, the attachment element may comprise two L-profiled sections centrally connected together.

In embodiments, an attachment element and a connector aperture may form a twist-lock engagement. In such an embodiment, the shape and size of a connector aperture and an attachment element may allow for insertion of the attachment element through the connector aperture in an unlocking position, and for the attachment element to be turned to a locking position in which it is unable to pass through the connector aperture. The attachment element may be turned back to the unlocking position, and passed back through the connector aperture to allow for disengagement of the transport device and support element.

The transport assembly may further comprise a supporting surface for supporting the object to be fired. The supporting surface may support a kiln furniture cassette, which in turn may support the object to be fired. The supporting surface may be releasably engageable with the support element and/or support member.

In some embodiments, the supporting surface is formed from removable batts securable to the support element and/or support member.

As used herein "removable batts" refers to batts that are in contact with the support members and removed from the support members before or after firing. The removable batts may be reused and secured to the support members in different positions.

In some embodiments, due to the arrangement of the support elements and/or support members, there may be a gap between the supporting surface when they are engaged on the support element and/or support members and the surface along which an object is to be transported in use. The gaps between the supporting surface and surface along which an object is to be transported in use may allow for air circulation. The air circulation between the supporting surface and surface along which an object is to be transported in use, may lead to the object to be fired having a higher thermal shock resistance.

In some embodiments the removable batts are securable to the support elements and/or support members using ceramic screws, stifts, nuts, bolts, ceramic glue, or a combination thereof.

In some embodiments, the transport assembly may transport at least two objects to be fired, for example, the transport assembly may transport at least four objects to be fired, at least six objects to be fired, at least ten objects to be fired, at least 20 objects to be fired, at least 40 objects to be fired, at least 200 objects to be fired. In some embodiments, the transport assembly may transport a plurality of objects to be fired.

In some embodiments, at least one of the: support element, support beam or transport device housing is formed from refractory material. A suitable refractory material may be selected from alumina, cordierite, nitride bonded silicon carbide (NSiC), silicon carbide (SiSiC) and recrystallised silicon carbide (RSiC), or any combination thereof. In a particular embodiment, the support element comprises silicon carbide.

Different parts in the assembly may be made of different materials, such as to obtain a combination of materials. The materials may be selected on the basis of the specific requirements, such as intended thermal profile, maximum temperature, load mass, load materials, or load consistency, such as solid or particulate.

The various parts of the assembly may be either hollow or solid. A combination of hollow and solid elements may be used. Solid elements tend to have improved physical stability, while hollow elements tend to have improved thermal stability. As the elements require rapid heating and cooling, hollow parts may be advantageous.

The parts of the transport assembly are put together to form a transport assembly for transporting objects to be fired in a kiln. The transport assembly may be used in different configurations, leading to transport assemblies with different sizes and weights. The size and configuration of the transport assembly may be tailored to the objects to be fired in the kiln and/or to the type of kiln and/or to the size of kiln and/or to the overall use of the transport assembly. The number and configuration of support members, transport devices and support elements may be customised to form a desired arrangement.

After the transport assembly is used in firing objects in a kiln, it may be disassembled into its parts. The parts may then be used to construct further transport assemblies for transporting objects to be fired in a kiln. If at any time there is damage to a part, the part in question may be replaced and used with the remaining parts.

In embodiments, the transport assembly further comprises guide rails. In use, the at least two rolling elements of the transport device is contactable with the guide rails to guide the transportation of the object to be fired into, through and/or out of a kiln.

### Method of transporting

The present invention provides a method of transporting objects to be fired in a kiln using the transport device or transport assembly, the method comprising the steps of:
a. placing an object to be fired in a kiln onto a transport device, or onto a transport assembly; and
b. transporting the object from a first location to a second location.

In other words, an object, or objects, to be fired in a kiln may be put onto a transport device or transport assembly and moved from one location to another.

In embodiments, the first location may be outside of a kiln, and the second location may be inside a kiln. In other embodiments, the first location may be inside a kiln, and the second location may be outside a kiln. In an alternative embodiment, the first location may be a position outside a kiln, and the second location may be a different position outside the kiln. The first location may be a position within a kiln, and the second location may be a different position within the kiln.

The object, or objects, to be fired in a kiln may be placed directly or indirectly onto a transport device or transport assembly. The object, or objects, to be fired in a kiln may be placed on a support element, a support member and/or a supporting surface of the transport assembly. Alternatively, the object, or objects, to be fired in a kiln may be placed on kiln furniture located on the transport device or transport assembly. The kiln furniture may be refractory kiln furniture cassettes.

The surface along which the object to be fired in a kiln is to be transported may be the ground floor of a kiln, or the surface of a rail. For example, a guide rail. In some embodiments, the surface may be a surface within a kiln.

### Use

The present invention provides use of a transport device for transporting an object to be fired into or out of a kiln, and for supporting the object in the kiln whilst being fired.

The present invention provides use of a transport assembly for transporting an object to be fired into or out of a kiln, and for supporting the object in the kiln whilst being fired.

The present invention provides use of the transport device or the transport assembly, to reduce the energy consumption for the firing of a ceramic item compared to kiln cars and/or to reduce the friction.

Surprisingly, the use of a transport device and/or transport assembly according to the present invention has been found by the inventors to reduce the amount of energy required for heating all the contents of a kiln. As such, energy consumption and environmental impact is reduced, and the firing time may be reduced.

The use of transport devices having partially housed rolling elements has also been found by the present inventors to reduce friction compared to conventional kiln cars. Without wishing to be bound by theory, the reduced friction is considered to be due to the housing of the transport devices protecting the rolling elements from dust. Dust may cause high friction and blockages, which the housing of the transport devices avoids. Furthermore, such an arrangement of rolling elements removes the need for numerous exposed rolling elements arranged within a kiln or on a surface leading to/from a kiln. The rolling elements within the transport device are the moveable part outside the kiln, providing a simple, effective solution for transporting an object to be fired into or out of a kiln.

The potential reduction of the mass of the transport device and/or transport assembly provides an improvement in energy ratio, leading to improved efficiency and therefore reduced cost and environmental impact. The mass may be even further reduced, and the energy ratio further improved with the use of a hollow bodied transport device.

Furthermore, the transport device and/or transport assembly may be even lighter due to the reduced weight thanks to silicon carbide-based materials, as used in certain embodiments of the invention. Therefore, transport device and/or transport assemblies according to the present invention may have an improved energy ratio and thermal shock resistance.

Furthermore, the transport device and/or transport assembly according to the present invention may take less space when used for firing of products in a kiln than kiln cars according to the state of the art. Therefore, more objects may be introduced into the kiln at any one time, allowing for larger batches of objects to be fired per firing operation to increase throughput. Alternatively, due to the reduced firing time when using transport device and/or transport assembly according to the present invention, small batches of objects may be fired more efficiently in a reduced space at the same rate as larger kilns using kiln cars.

In summary, in certain embodiments, the transport device or transport assembly may have one or more of the following effects:
- decreased weight;
- reduced energy consumption;
- reduced firing time;
- improved efficiency;
- improved simplicity of design of the transport assembly; and
- improved ease of maintenance and replacement of parts.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

### EXAMPLES

The following illustrates examples of the transport device and transport assembly, and related aspects described herein. Thus, these examples should not be considered to restrict the present disclosure, but are merely in place as an example of the present disclosure. Similar reference numerals are used to refer to similar features. For example, 10 and 110 are used to refer to similar features.

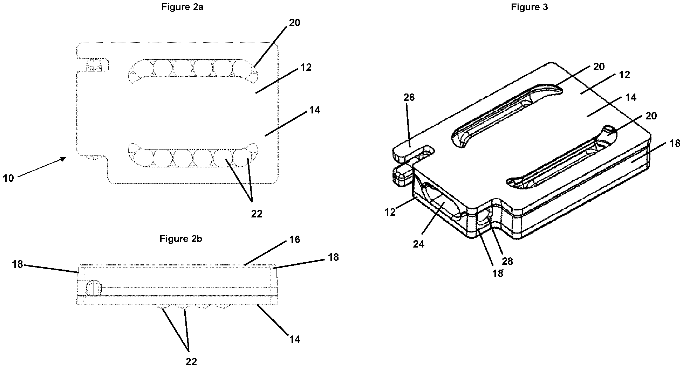

Figures 2a, 2b, 3a, 3b, 4a and 4b show an exemplary embodiment of a transport device (10) for transporting objects to be fired into or out of a kiln.

The transport device (10) comprises a housing (12) that is at least in part hollow. The housing (12) comprises a body comprising a bottom surface (14), a top surface (16) and a plurality of sidewalls (18). The bottom surface (14) of the housing (12) is planar. As shown in Figure 2a, the bottom surface (14) of the housing (12) comprises two rolling element apertures (20). The rolling element apertures (20) are symmetrical. Each rolling element aperture (20) is substantially C-shaped. The rolling element apertures (20) are arranged parallel to one another. When in use, the longitudinal aspect of the rolling element aperture (20) runs in the direction of desired movement.

As shown best in Figures 2a and 2b, the transport device (10) comprises a plurality of rolling elements (22) for facilitating movement of the housing (12) along a surface along which the object to be fired in a kiln is to be transported. The rolling elements (22) are rotatable within the housing (12). A part of each rolling element is housed in the housing (12) and a part of each rolling elements (22) extends through one of the rolling element apertures (20) beyond the bottom surface (14) of the housing (12). In other words, each rolling element aperture (20) has a plurality of rolling elements (22) arranged such that at least a part of each rolling element (22) is partially extending through each rolling element aperture (20).

As may be seen from Figures 2a and 2b, in the depicted embodiment, the rolling elements (22) comprise a plurality of refractory balls.

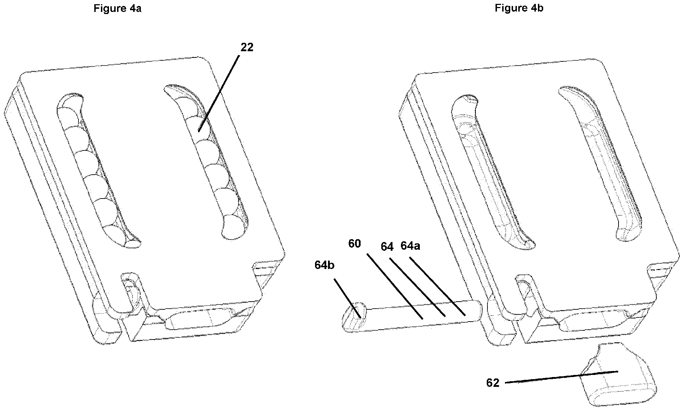

Figure 3 shows a perspective view of the bottom of the transport device (10), without rolling elements (22) inserted into the housing (12). The housing (12) comprises an insertion aperture (24). The insertion aperture (24) is located within a sidewall (18) of the housing (12) and extends through into the body of the housing (12). The insertion aperture (24) is dimensioned to allow for insertion and/or removal of the rolling elements (22) into/from the housing (12). The rolling elements (22) may be releasably secured in the body of the housing (12) by a releasable securing element (60). As such, the releasable securing element (60) is dimensioned such that rolling elements (22) cannot be removed from the housing (12) whilst it is engaged with the housing (12). The use of the releasable securing element (60) will be described in more detail in reference to Figures 4a and 4b.

In the depicted embodiment, the housing (12) comprises a securing portion (26) to allow for insertion of a releasable securing element (60). Locking apertures (28a, 28b) are located in the sidewalls (18) of the housing (12). The locking apertures (28a, 28b) are located either side of the sidewall (18) comprising the insertion aperture (24).

The use of the releasable securing element is best seen in Figures 4a and 4b. The releasable securing element (60) secures the rolling elements (22) by barring the insertion aperture (24). The releasable securing element (60) comprises two parts, a blocking portion (62) and a locking portion (64). The blocking portion (62) is of a complementary shape and dimension to the insertion aperture (24). The blocking portion (62) comprises apertures to allow the locking portion (64) to pass through it. The locking portion (64) of the releasable securing element (60) has a substantially L-shaped cross section comprising an elongated (64a) and an abutting portion (64b). The elongated portion (64a) of the L-shaped locking portion is dimensioned to fit through the locking apertures (28a, 28b). The abutting portion (64b) of the L-shaped locking pin is dimensioned such that it does not fit through the locking apertures (28a, 28b).

In use, the blocking portion (62) is inserted into the insertion aperture (24), the elongated portion (64a) of the locking portion (64) is then inserted through the securing portion (26), through a first locking aperture (28a), through the blocking portion (62) which is located within the insertion aperture (24), and out of a second locking aperture (28b). As the abutting portion (64b) of the locking portion (64) does not fit through the locking aperture (28a, 28b), the abutting portion (64b) abuts the sidewall (18) in which the first locking aperture (28a) is located to secure the releasable securing element (60) in place.

The releasable securing element (60) may be removed by the reverse movement. Releasably securing the rolling elements (22) allows for ease of maintenance of the transport device (10). For example, if the rolling elements (22) experience wear, the rolling elements (22) may be easily removed and replaced with new rolling elements (22). The type of rolling element may also be changed depending on the desired use of the transport device (10).

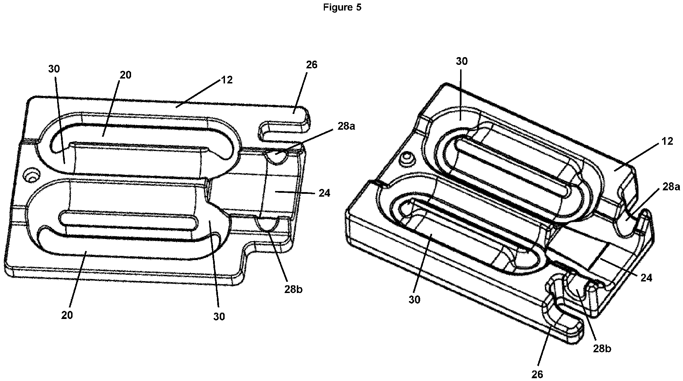

Figure 5 shows the internal structure of the transport device (10) depicted in Figures 2a, 2b, 3, 4a and 4b. The position of the locking apertures (28a, 28b) in the sidewalls (18) located either side of the sidewall (18) comprising the insertion aperture (24) is best shown in Figures 5. The pathway between the two locking apertures (28a, 28b), is perpendicular to the insertion aperture (24). As such, when the releasable securing element (60) is occupying the pathway between the two locking apertures (28a, 28b), the insertion aperture (24) is blocked and insertion and/or removal of the rolling elements (22) is prohibited.

In the depicted embodiment, two rolling element tracks (30) are provided within the housing for accommodating the rolling elements (22). Each rolling element track (30) comprises a rolling element aperture (20). In use, the rolling elements (22) can move around the rolling element track (30) as they rotate.

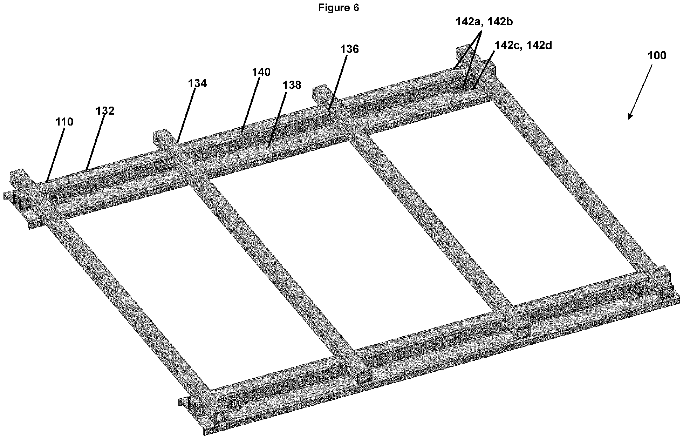

Figure 6 shows an embodiment of a transport assembly (100) for transporting an object to be fired into or out of a kiln. The depicted transport assembly (100) comprises two support elements (132). The four support elements (132) are arranged parallel to one another.

The transport assembly comprises four transport devices (110). The transport devices (110) are releasably engageable with the support element (132) to allow for movement of the transport assembly (100).

The transport assembly (100) further comprises four support members. In the depicted embodiment, the support members are in the form of support beams (134). The support beams (134) are formed from SiC. The support beams (134) are arranged parallel to one another, and perpendicular to the support elements (132).

The support beams (134) and support elements (132) are connected together via interference fit. Each support element (132) comprises four engagement notches (136) of a complementary size and shape to allow for interference fit between the support beams (134) and support elements (132). Each support beam (134) slots into an engagement notch (136) in each support element (132) during use. The support beams (134) may be removed from the engagement notches (136) after use to disassemble the transport assembly (100).

In the depicted embodiment, the support elements (132) have a t-shaped cross section. The t-shaped cross section comprises a wider section (138) at the base, and a narrower section (140) extending vertically from the wider section (138). The engagement notches (136) for securing the support beams (134) are positioned in the narrower section (140) of the support element (132).

The four transport devices (10) are releasably engaged with the support elements (132). Each support element (132) comprises two connector apertures (142a, 142b) in the narrower section (140) of the support element (132), and two connector apertures (142c, 142d) in the wider section (138) of the support element (132), with one connector aperture (142c, 142d) located either side of the narrower section (140). The transport devices (10) are releasably engaged to the support elements (132) using attachment elements (144). Each transport device (10) comprises two attachment means (146). The attachment means (146) extends from the top surface (16) of the housing (12). Each attachment means (146) has an attachment aperture (148). To attach the transport devices (10) to the support elements (132), the attachment means (146) of the transport device (10) are inserted into connector apertures (142c, 142d) in the wider section (138) of the support elements (132). The attachment aperture (148) is in the portion of the attachment means (146) of the transport device (10) that extends through the connector apertures (142c, 142d). When the attachment means (146) have been inserted through the connector apertures (142c, 142d), the attachment apertures (148) align with connector apertures (142a, 142b) in the narrower section (140) of the support element (132). An attachment element is used to releasably secure each transport device (10) to the support element (132), by insertion through the attachment apertures (148) and two connector apertures (142a, 142b) in the narrower section (140) of the support element (132).

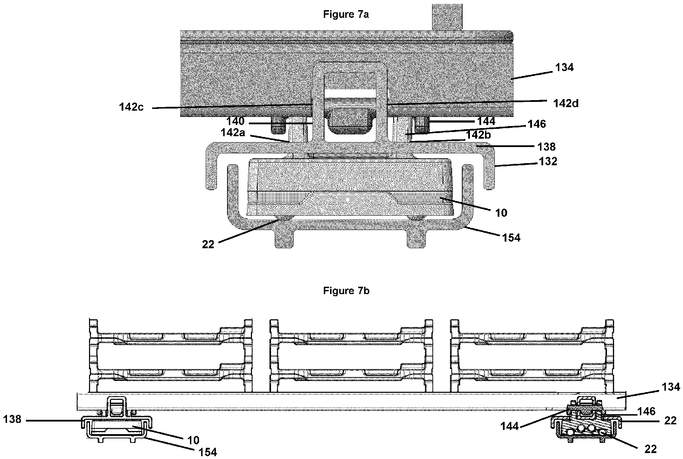

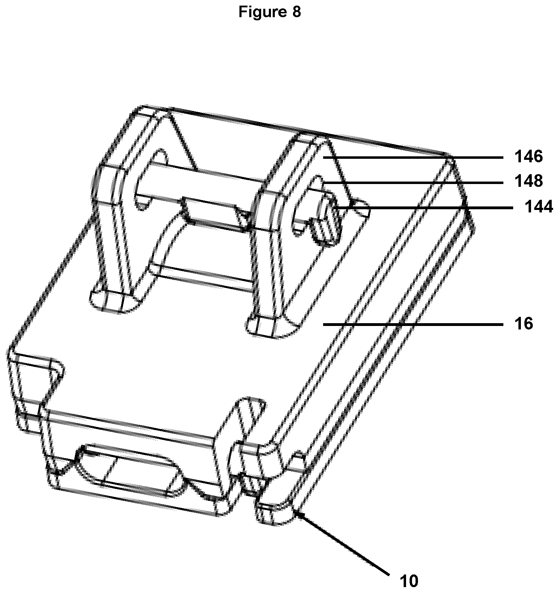

As best shown in Figures 7 and 8, the attachment element (144) comprises two L-profiled sections connected together by a central section. The attachment element (144) and connector apertures (142a, 142b) form a twist-lock engagement. The dimensions of the connector apertures (142a, 142b) in the narrower section (140) of the support element (132) and the attachment element (144) allow for insertion of the attachment element (144) through the connector apertures (142a, 142b) in the narrower section (140) of the support element (132) when the attachment element (144) is in an unlocking position. The attachment element (144) may then be turned to a locking position in which it is unable to pass through the connector apertures (142a, 142b). The attachment element (144) may be turned back to the unlocking position, and passed back through the connector apertures (142a, 142b) in the narrower section (140) of the support element (132) to allow for releasable engagement of the transport device (10) and support element (132). Figure 8 shows the attachment element (144) and attachment means (146) relative to the transport device (10) when not connected to a support element (132).

Figure 7b shows the transport assembly of Figure 7a in use, alongside guide rails and kiln furniture. A side view of the transport assembly is provided on the left hand side of the Figure, similar to in Figure 7a, and a cross sectional view of the transport device connected to the support elements and support beams to form the transport assembly is shown on the right hand side of Figure 7b. The manner in which the attachment element (144) passes through the connector apertures (142a, 142b) in the narrower section (140) of the support element, and the attachment apertures (148) of the attachment means (146) is best shown in Figure 7b.

The transport assembly (100) further comprises guide rails (154). The guide rails (154) comprise SiC. In use, as shown in Figure 7, the rolling elements (22) of the transport device (10) contact the guide rails (154) to guide the transportation of the object to be fired into, through and/or out of a kiln.

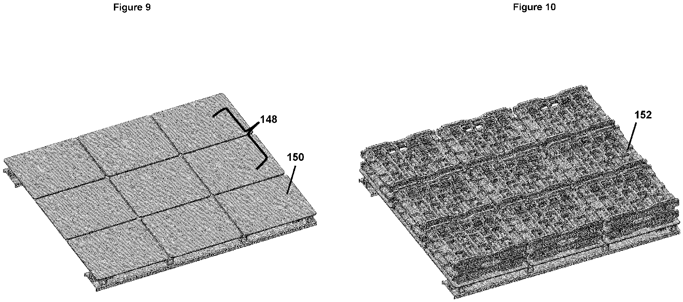

As shown in Figure 9, an embodiment of the transport assembly (100) further comprises a supporting surface (148) for supporting the object to be fired. In the depicted embodiment, the supporting surface is formed from removable batts (150) secured to the support beams (134).

In the embodiment depicted in Figure 10, the support surface (148) supports a kiln furniture cassette (152), which in turn may support the object to be fired.

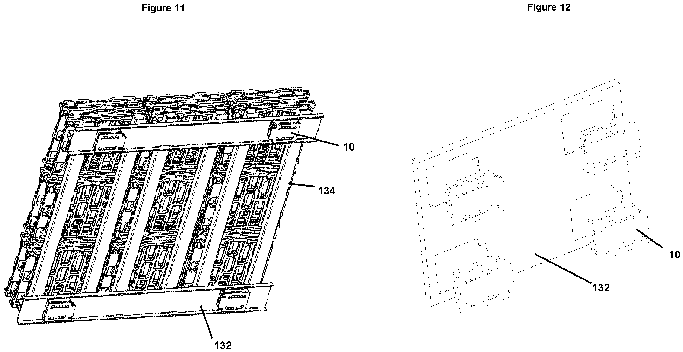

A bottom view of the transport assembly with the kiln furniture is shown in Figure 11, in which the position of the transport device (10) relative to the support elements (132) and support beams (134) is further illustrated. A transport assembly (100) as depicted was found by the present inventors to weigh about 225 kg, which equated to about 26.44 kg/m². A conventional kiln car has a weight of about 9557 kg, which equates to about 334 kg/m². As such, the present inventors surprisingly found that the weight ratio of the transport assembly of the present invention to that of a conventional kiln car was 1:12.6. Therefore, the energy consumption can be reduced by at least 10 times. This reduction of the mass of the hollow transport device and/or transport assembly provides an improvement in energy ratio, leading to improved efficiency and therefore reduced cost and environmental impact.

Figure 12 shows an alternative embodiment of a transport assembly (100) according to the present invention. The transport device in this embodiment has the features described above in relation to the first embodiment, however the attachment means are different. The transport device (10) is attached to a support element (132) via depressions within the support element (132) of a complementary size and shape to the top surface of the transport device (10) to provide an interference fit. In the pictured embodiment, the support element is formed as a batt.

The invention has been described above with reference to numerous aspects and specific examples. Many variations will suggest themselves to those skilled in the art in light of the above description. All such obvious variations are within the full intended scope of the appended claims. Other aspects of the invention can include, but are not limited to, the subject matter described in the following numbered paragraphs:
1. A transport device for transporting an object to be fired into, through or out of a kiln, the transport device comprising:
   a housing comprising a surface having a rolling element aperture; and
   at least two rolling elements for facilitating movement of the object to be fired along a surface along which the object to be fired in a kiln is to be transported;
   wherein the at least two rolling elements are rotatable within the housing and wherein the rolling elements are housed in the housing and a part of the rolling elements extends through the rolling element aperture beyond the surface of the housing;
   such that, in use, the rolling elements rotate within the housing to transport the object to be fired in a kiln along the surface along which the object to be fired in a kiln is to be transported.
2. A transport device according to numbered paragraph 1, wherein the surface having a rolling element aperture is a bottom surface, or a top surface, preferably a top surface in use.
3. A transport device according to numbered paragraph 1 or 2, wherein the position of the transport device is fixed within a kiln, for example, wherein the transport device is fixed to the base of a kiln.
4. A transport device according to any preceding numbered paragraph, wherein the surface along which the object to be fired in a kiln is to be transported is the surface of the transport device.
5. A transport device according to any preceding numbered paragraph, wherein the at least two rolling elements are removeable from the housing.
6. A transport device according to any preceding numbered paragraph, wherein the at least two rolling elements are selected from: refractory balls, beads, or rollers.
7. A transport device according to any preceding numbered paragraph, wherein the transport device comprises at least two rolling element apertures, and wherein the at least two rolling elements partly extend through the at least two rolling element apertures.
8. A transport device according to any preceding numbered paragraph, wherein the number of rolling elements is equal or higher than the number of rolling element apertures.
9. A transport device according to any preceding numbered paragraph, wherein the housing is formed from a refractory material.
10. A transport device according to numbered paragraph 9, wherein the housing comprises cordierite, NSiC, SiSiC, RSiC, and/or alumina.
11. A transport device according to any preceding numbered paragraph, further comprising a releasable securing element securable by complementary engagement with a portion of the housing configured to allow for insertion and/or removal of the rolling element into/from the housing.
12. A transport device according to any preceding numbered paragraph, wherein the object to be fired in the kiln is a ceramic object.
13. Use of a transport device according to any one of the preceding numbered paragraph for transporting an object to be fired into or out of a kiln, and for supporting the object in the kiln whilst being fired.
14. A transport assembly for transporting an object to be fired into or out of a kiln, the transport assembly comprising:
   a. a support element; and
   b. at least a transport device according to any one of numbered paragraphs 1 to 12;
   c. wherein the transport device is releasably engageable with the support element to allow for movement of the transport assembly.
15. The transport assembly according to numbered paragraph 14, wherein at least one of the: support element or transport device housing is formed from refractory material.
16. The transport assembly according to numbered paragraphs 14 or 15, further comprising guide rails, wherein in use, the rolling element of the transport device is contactable with the guide rails to guide the transportation of the object to be fired into, through and/or out of a kiln.
17. The transport assembly according to numbered paragraphs 14 to 16, further comprising a supporting surface for supporting the object to be fired or for supporting a kiln furniture cassette, wherein the supporting surface is releasably engageable with the support element.
18. The transport assembly according to numbered paragraphs 14 to 17, wherein the transport device is releasably engageable with the support element via depressions within the support element.
19. A method of transporting objects to be fired in a kiln using a transport device or transport assembly, the method comprising the steps of:
   a. placing an object to be fired in a kiln onto a transport device as in numbered paragraph 1 to 12, or onto a transport assembly as in numbered paragraph 14 to 18; and
   b. transporting the object from a first location to a second location.
20. Use of the transport device of numbered paragraphs 1 to 12 or the transport assembly of numbered paragraphs 14 to 18, to reduce the energy consumption for the firing of a ceramic item compared to kiln cars and/or to reduce the friction.

## Claims

1. A transport device for transporting an object to be fired into, through or out of a kiln, the transport device comprising:
a housing comprising a bottom surface having a rolling element aperture; and
at least two rolling elements for facilitating movement of the housing along a surface along which the object to be fired in a kiln is to be transported;
wherein the at least two rolling elements are rotatable within the housing and wherein the rolling elements are housed in the housing and a part of the rolling elements extends through the rolling element aperture beyond the bottom surface of the housing;
such that, in use, the rolling elements rotate within the housing to transport the transport device along the surface along which the object to be fired in a kiln is to be transported.

2. A transport device according to claim 1, wherein the at least two rolling elements are removeable from the housing.

3. A transport device according to claim 1 or 2, wherein the at least two rolling elements are selected from: refractory balls, beads, or rollers.

4. A transport device according to any preceding claim, wherein the transport device comprises at least two rolling element apertures, and wherein the at least two rolling elements partly extend through the at least two rolling element apertures.

5. A transport device according to any preceding claim, wherein the number of rolling elements is equal or higher than the number of rolling element apertures.

6. A transport device according to any preceding claim, wherein the housing is formed from a refractory material.

7. A transport device according to claim 6, wherein the housing comprises cordierite, NSiC, SiSiC, RSiC, and/or alumina.

8. A transport device according to any preceding claim, further comprising a releasable securing element securable by complementary engagement with a portion of the housing configured to allow for insertion and/or removal of the rolling element into/from the housing.

9. A transport device according to any preceding claim, wherein the object to be fired in the kiln is a ceramic object.

10. Use of a transport device according to any one of the preceding claims for transporting an object to be fired into or out of a kiln, and for supporting the object in the kiln whilst being fired.

11. A transport assembly for transporting an object to be fired into or out of a kiln, the transport assembly comprising:
a support element; and
at least a transport device as claimed in any one of claims 1 to 9;
wherein the transport device is releasably engageable with the support element to allow for movement of the transport assembly.

12. The transport assembly according to claim 11, wherein at least one of the: support element or transport device housing is formed from refractory material.

13. The transport assembly according to claim 11 or 12, further comprising guide rails, wherein in use, the rolling element of the transport device is contactable with the guide rails to guide the transportation of the object to be fired into, through and/or out of a kiln.

14. The transport assembly according to any one of claims 11 to 13, further comprising a supporting surface for supporting the object to be fired or for supporting a kiln furniture cassette, wherein the supporting surface is releasably engageable with the support element.

15. A method of transporting objects to be fired in a kiln using a transport device or transport assembly, the method comprising the steps of:
a. placing an object to be fired in a kiln onto a transport device as claimed in claims 1 to 9, or onto a transport assembly as claimed in claims 11 to 14; and
b. transporting the object from a first location to a second location.

16. Use of the transport device of any claim 1 to 9 or the transport assembly of claims 11 to 14, to reduce the energy consumption for the firing of a ceramic item compared to kiln cars and/or to reduce the friction.
